# EUROPEAN PATENT SPECIFICATION

(11) **EP 2 053 332 B1**
(45) Date of publication and mention of the grant of the patent: **10.02.2016**
(21) Application number: 08017939.3
(22) Date of filing: 14.10.2008
(51) Int. Cl.: F26B 23/00, F26B 23/02

(54) **Operating site with an electricity/heat generator which functions on a combustion basis**
Betriebsstätte mit einem auf Verbrennungsbasis funktionierenden Strom-/Wärmegenerator
Site d'exploitation avec un générateur électrique/thermique qui fonctionne sur la base d'une combustion

(30) Priority: 27.10.2007 DE 102007051474
(43) Date of publication of application: 29.04.2009
(73) Proprietor: Johns Manville Europe GmbH, 86399 Bobingen (DE)
(72) Inventor: Löhr, Ludwig, 63930 Neunkirchen (DE)
(74) Representative: Möhring, Friedrich

(56) References cited:
- EP-A1- 1 995 379
- US-A- 3 865 540
- US-A- 4 745 868
- US-A1- 2004 261 285
- US-A1- 2006 010 712

## Description

The present invention relates to an operating site according to the preamble of claim 1.

US 2006/0010712 A1, forming the basis for the preamble of claim 1, discloses a process and apparatus for manufacture of fertilizer products from manure and sewage. It teaches an operating site comprising a dryer vessel, into which there are fed the off-gas of a generator driving gas turbine as well as the hot combustion gas of an optional additional burner. The output from the dryer vessel is fed to a separator where the solids and gas are separated, the gas being released into the atmosphere or treated in a downstream processing unit comprising a further separator.

EP 1995379 A1 discloses a mat product drying chamber which is heated by using the exhaust gas of a generator driving gas turbine fed into combustion chamber comprising additional burners, the hot gases leaving the combustion chambers being directed into the mat product drying chamber.

US 2004/261285 A1 discloses a drying machine system utilizing a plurality of micro gas turbines driving a power generator. The material to be dried is exposed to the combined heat of a burner and of the micro gas turbines, wherein the burner can fire directly into a combustion chamber of the drying machine.

The present invention, with other words, relates to an operating site with an electricity/heat generator which functions on a combustion basis, the waste heat of which generator is to some extent used to heat the operating site, wherein the operating site further has at least one thermal treatment chamber for the subjecting of products arranged therein to heat. Operating sites of this type, in which the electricity/heat generator which functions on a combustion basis is used by exploiting the principle of power/heat coupling on the one hand to supply at least one part of the operating site with electrical energy and on the other hand to provide ambient and/or process heat, are sufficiently known from the prior art. For example, reference is made to the agricultural sector, where, in corresponding operating sites, electrical energy is produced on the one hand and heating and process heat (e.g. for drying animal feed in a thermal handling chamber) is produced on the other hand by using a biogas plant with a gas engine as electricity/heat generator. The waste heat of the biogas plant is, in the process, fed to a heating circuit and the thermal treatment chambers via heat exchangers.

In the context of the present invention by contrast one is, in particular, thinking of those operating sites in which the products arranged in the thermal treatment chamber - unlike e.g. animal feed - are not especially sensitive with regard to the chemical composition of the atmosphere prevailing within the thermal treatment chamber. The object of the present invention consists, in this case, in providing an energy-efficient operating site of the type mentioned above, in which a particularly effective thermal treatment of the products is achieved with a high degree of flexibility with regard to the energy flows and with as little expenditure as possible on plant technology.

This object is achieved with an operating site according to Claim 1, which - in addition to the features which have already been mentioned above - stands out in particular in that it is set up for the exhaust gas of the electricity/heat generator to flow directly through the at least one thermal treatment chamber, wherein at least one additional heater which functions on a combustion basis for supplementary heating of the treatment chamber is provided and wherein the exhaust gas of the electricity/heat generator which flows through the thermal treatment chamber and the exhaust gas of the at least one additional heater can be fed to a common post treatment. Therein, the electricity/heat generator comprises a gas engine and a cooling circuit and the waste heat of the electricity/heat generator provided in the cooling circuit is to some extent used to heat the operating site. Furthermore, the cooling circuit comprises a heat exchanger which is connected on the one hand with a conduit system which carries the heated cooling water of the gas engine generator units and on the other hand with a heating circuit of the operating site in order to heat the latter.

Flowing the hot exhaust gas of the electricity/heat generator directly through the treatment chamber means that its thermal energy (heat which can be felt) is used in a particularly simple and effective manner. The expenditure on plant technology is reduced in comparison with the variants for producing process heat known from the prior art, as, in the present case, no heat exchanger need be provided for this purpose.

Further, the combination of the exhaust gas of the electricity/heat generator, which gas flows through the treatment chamber, and of the at least one additional heater in the thermal treatment chamber means that a particularly effective subjecting of the products to heat which can be controlled well can be guaranteed, wherein the expenditure on plant technology is - in comparison with the known methods from the prior art for power/heat coupling in operating sites - even further minimized, in that the exhaust gas of the electricity/heat generator which flows directly through the treatment chamber and the exhaust gas of the additional heater which likewise functions on a combustion basis are fed to a common post treatment. In the process, there is provided that the at least one additional heater "fires" to a certain extent directly into the treatment chamber, whereby the exhaust gas of the additional heater also gets directly into the treatment chamber and can be fed to the common post treatment with the exhaust gas of the electricity/heat generator in a simple manner. Within the framework of the common post treatment, care is, in particular, to be taken that pollutants that may be formed in the treatment chamber, such as, for example, fine dust, are effectively removed in compliance with the relevant valid legal emissions guidelines.

Overall, in the context of the present invention, an operating site with particularly effective exploitation of the principle of power/heat coupling is therefore produced. Suitable fans in the treatment chamber can contribute to a targeted and, as far as possible, uniform subjecting of the products to the hot exhaust gases.

In a particularly preferred configuration of the present invention, it is provided that the operating site is a production plant for glass fibre products, wherein the at least one thermal treatment chamber serves for drying the glass fibre products produced in the operating site, in particular in the form of glass fibre mats, or is set up for this purpose. In this context, the realization that drying glass fibre products such as glass fibre mats and/or nonwovens with the aid of polluted exhaust gas is possible without relevant losses in quality of the end product is of importance. In the treatment chamber, glass dust which is mixed in with the exhaust gas is removed again from the latter in the context of the exhaust gas post treatment. A gas engine generator unit is the type of electricity/heat generator which is provided in an operating site according to the invention.

Further, it is provided, in accordance with a preferred development of the invention, that at least one controllable valve for regulating the throughput quantity of the exhaust gas of the electricity/heat generator which is to be channelled through the treatment chamber is provided for achieving the desired process temperature in the at least one treatment chamber, wherein temperature fluctuations of the exhaust gas which is flowing through the treatment chamber that may arise can be compensated by means of the at least one additional heater. A suitable regulation apparatus is to be provided for this purpose. Thereby, an operating site is also provided which is optimized with respect to a best possible controllability of the temperature exposure in the treatment chamber.

In a further advantageous configuration of the present invention, it is provided that a plurality of thermal treatment chambers are provided, each with at least one additional heater, wherein the exhaust gas of the electricity/heat generator is, by means of suitable distribution and combining means, distributed to the various treatment chambers and subsequently combined again for common post treatment with the exhaust gases of the additional heaters. The particular advantage here consists in the fact that, in an operating site, a number of thermal treatment chambers can be supplied with the exhaust gas of the at least one electricity/heat generator.

In the previously mentioned case, once again in a preferred manner, a separately controllable or regulatable exhaust gas throughput quantity regulation valve can be provided for each treatment chamber, so that the exact nature of the temperature exposure in each treatment chamber can hereby also be set individually.

The previously mentioned plurality of thermal treatment chambers need not necessarily be treatment chambers which are spaced apart from one another, but rather they may also, if appropriate, be various treatment zones of a larger treatment chamber, through which the products produced successively pass in the context of their thermal treatment.

According to the present invention the post treatment of the exhaust gases is a mechanical or chemical cleaning of the combined exhaust gas stream. A corresponding post treatment plant therefore only needs to be present once in the context of the present invention, which in addition to the plant technology expenditure also minimizes the corresponding maintenance and servicing expenditure.

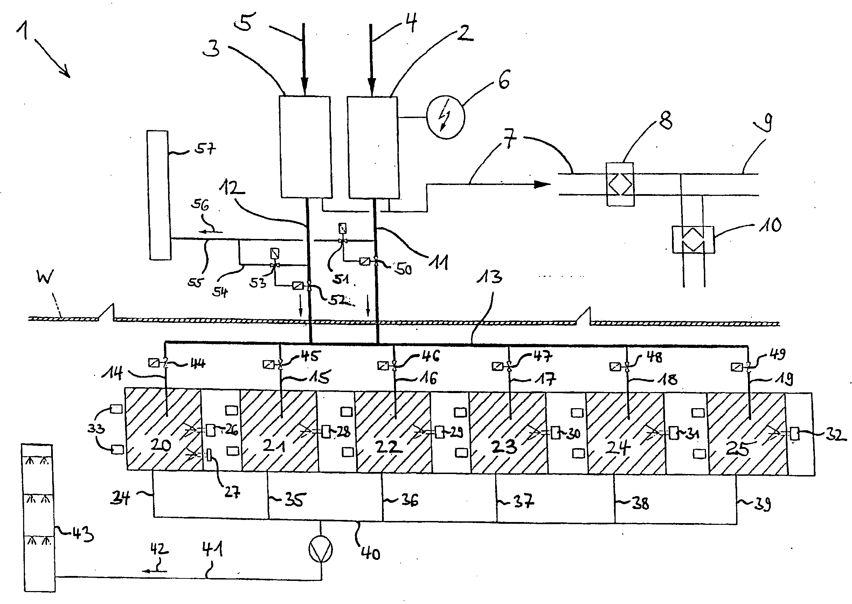

An exemplary embodiment of the invention is described in more detail below on the basis of the drawing.

An operating site 1 for glass fibre products is illustrated schematically in the drawing - in any case insofar as this is relevant for the present invention. Two gas engine generator units 2, 3 are available for electricity and heat generation, to which - according to the arrows 4, 5 - the gas provided for combustion is fed. The gas engine generator units 2, 3 provide both electrical energy 6 and, via their cooling circuits, waste heat for heating the operating site 1. A heat exchanger 8 is provided in the usual manner for heating the operating site 1, that is to say for providing ambient heat, which heat exchanger is connected on the one hand with a conduit system 7 which carries the heated cooling water of the gas engine generator units 2, 3 and on the other hand with a heating circuit 9 of the operating site in order to heat the latter. Further, preheating the combustion air for the additional heater (see below) can also be realized by using a second heat exchanger 10.

The exhaust gases of the two gas engine generator units 2, 3 are, by means of a conduit system 11, 12, 13-19, distributed through the wall W to six different thermal treatment chambers 20-25 and introduced directly into the latter. Each treatment chamber 20-25 is assigned at least one additional heater 26-32 which works on a combustion basis, which additional heater fires directly into the respective treatment chamber 20-25. In addition, two fans 33 are assigned to each treatment chamber 20-25 to ensure the desired air and heat flow within the respective treatment chambers or zone 20-25. The thermal treatment chambers serve as heaters for the subjecting of glass fibre mats to heat in a temperature range of 150°C-250°C.

Finally, the exhaust gases of the two gas engine generator units 2, 3 and the additional heaters 26-32 leave the respective treatment chamber and are combined again by a conduit system 34-41, in order to subsequently be fed together - according to arrow 42 - to a chemical posttreatment or cleaning apparatus 43, before they then escape into the atmosphere.

A separately controllable or regulatable valve 44-49 is connected upstream of each treatment chamber for regulating the exhaust gas throughput through the individual treatment chambers 20-25, using which valve - in co-operation with the respective additional heaters 26-32 - the temperature in the respective treatment chamber 20-25 can be set to a predeterminable value. Temperature fluctuations of the exhaust gas of the electricity/heat generators 2, 3 which may arise are compensated, if appropriate, by the additional heaters 26-32 which can likewise be regulated in terms of their heating output.

In order to be able to operate the two gas engine generator units 2, 3 to provide electrical energy and ambient heat, even when no exhaust gas throughput through the thermal treatment chambers 20-25 is desired, e.g. during a maintenance period for the treatment chambers 20-25 or in the event of a fault, the exhaust gases can be diverted out of the conduits 11, 12 by means of suitable flow/locking valves 50, 51, 52, 53, via the conduits 54, 55 - in accordance with arrow 56 - to an emergency chamber 57, where the exhaust gas is preferably subjected to a mechanical exhaust gas cleaning, before it escapes into the atmosphere. Additionally, an exhaust gas reservoir can also, if appropriate, be provided, in which a certain quantity of the exhaust gas produced by the gas engine generator units 2, 3 can be stored, in order, after the treatment chambers 20-25 have been brought back into use, to feed it again, if appropriate, to the conduit system 11-19 which leads to the treatment chambers 20-25 and therefore to the more efficient chemical cleaning.

## Claims

1. Operating site (1) with at least one thermal treatment chamber (20-25) for the subjecting of products arranged therein to heat and an electricity/heat generator (2, 3) which functions on a combustion basis, wherein it is set up for the exhaust gas of the electricity/heat generator (2, 3) to flow directly through the at least one thermal treatment chamber (20-25), wherein at least one additional heater (26-32) which functions on a combustion basis for supplementary heating of the treatment chamber (20-25) is provided, wherein the additional heater (26-32) fires directly into the respective treatment chamber (20-25) and wherein the exhaust gas which flows through the thermal treatment chamber (20-25) and the exhaust gas of the at least one additional heater (26-32) are fed to a common post treatment, the latter being a mechanical or chemical cleaning of the exhaust gas,
**characterized in that**
the electricity/heat generator (2, 3,) comprises a gas engine and a cooling circuit and
the waste heat of the electricity/heat generator (2, 3,) provided in the cooling circuit is to some extent used to heat the operating site (1),
wherein the cooling circuit comprises a heat exchanger (8) which is connected on the one hand with a conduit system (7) which carries the heated cooling water of the gas engine generator units (2, 3) and on the other hand with a heating circuit (9) of the operating site in order to heat the latter.

2. Operating site according to Claim 1,
**characterized in that** the cooling circuit comprises an additional heat exchanger (10) which is connected with the heating circuit (9) of the operating site for preheating the combustion air for the additional heater (26-32).

3. Operating site according to Claims 1 or 2,
**characterized in that**
the operating site (1) is a production plant for glass fibre products, wherein the at least one treatment chamber serves for drying the glass fibre products produced, in particular in the form of glass fibre mats.

4. Operating site according to one of the Claims 1 to 3,
**characterized**
**in that** at least one controllable valve (44-49) for regulating the throughput quantity of the exhaust gas of the electricity/heat generator (2, 3) which is to be channelled through the treatment chamber (20-25) is provided for achieving the desired process temperature in the at least one treatment chamber (20-25), wherein temperature fluctuations of the exhaust gas which is flowing through the treatment chamber (20-25) that may arise can be compensated by means of the at least one additional heater (26-32) to achieve a constant temperature in the treatment chamber (20-25).

5. Operating site according to any one of the preceding claims,
**characterized in that**
a plurality of thermal treatment chambers (20-25) are provided, each with at least one additional heater (26-32), wherein the exhaust gas of the electricity/heat generator (2, 3) is, by means of suitable distribution and combining means (11-19; 34-41), distributed to the various treatment chambers and subsequently combined again for common post treatment with the exhaust gases of the additional heaters (26-32).

6. Operating site according to Claim 4 and Claim 5,
**characterized in that**
for each treatment chamber (20-25), a separate valve (44-49) for regulating the throughput quantity of the exhaust gas to be channelled through the respective treatment chamber (20-25) is provided, so that the temperatures in the various treatment chambers (20-25) can be set separately and independently of one another.

## Patentansprüche

1. Betriebsstätte (1) mit mindestens einer Wärmebehandlungskammer (20 - 25), um darin angeordnete Produkte Wärme auszusetzen, und einem Elektro-/Wärmegenerator (2, 3), der auf Verbrennungsbasis arbeitet, wobei sie derart eingerichtet ist, dass das Abgas des Elektro-/Wärmegenerators (2, 3) direkt durch die mindestens eine Wärmebehandlungskammer (20 - 25) strömt, wobei mindestens ein zusätzliches Heizgerät (26 - 32) bereitgestellt ist, das auf Verbrennungsbasis arbeitet, für eine ergänzende Erwärmung der Behandlungskammer (20 - 25), wobei das zusätzliche Heizgerät (26 - 32) direkt in die entsprechende Behandlungskammer (20 - 25) feuert und wobei das Abgas, das durch die Wärmebehandlungskammer (20 - 25) strömt, und das Abgas des mindestens einen zusätzlichen Heizgerätes (26 - 32) zu einer gemeinsamen Nachbehandlung geführt werden, wobei Letztere ein mechanisches oder chemisches Reinigen des Abgases ist,
**dadurch gekennzeichnet, dass**
der Elektro-/Wärmegenerator (2, 3) einen Gasmotor und einen Kühlkreis umfasst und
die Abwärme des Elektro-/Wärmegenerators (2, 3), die im Kühlkreis bereitgestellt wird, teilweise verwendet wird, um die Betriebsstätte (1) zu erwärmen,
wobei der Kühlkreis einen Wärmetauscher (8) umfasst, der einerseits mit einem Leitungssystem (7) verbunden ist, welches das erwärmte Kühlwasser der Gasmotor-Generatoreinheiten (2, 3) transportiert, und andererseits mit einem Heizkreis (9) der Betriebsstätte, um Letztere zu erwärmen.

2. Betriebsstätte nach Anspruch 1, **dadurch gekennzeichnet, dass** der Kühlkreis einen zusätzlichen Wärmetauscher (10) umfasst, der mit dem Heizkreis (9) der Betriebsstätte verbunden ist, um die Verbrennungsluft für das zusätzliche Heizgerät (26 - 32) vorzuwärmen.

3. Betriebsstätte nach Anspruch 1 oder 2, **dadurch gekennzeichnet, dass** die Betriebsstätte (1) eine Produktionsanlage für Glasfaserprodukte ist, wobei die mindestens eine Behandlungskammer zum Trocknen der produzierten Glasfaserprodukte, insbesondere in Form von Glasfasermatten, dient.

4. Betriebsstätte nach einem der Ansprüche 1 bis 3, **dadurch gekennzeichnet, dass** mindestens ein steuerbares Ventil (44 - 49) bereitgestellt ist, um die Durchsatzmenge des Abgases aus dem Elektro-/Wärmegenerator (2, 3) zu regeln, die durch die Behandlungskammer (20 - 25) zu leiten ist, um in der mindestens einen Behandlungskammer (20 - 25) die gewünschte Prozesstemperatur zu erreichen, wobei möglicherweise auftretende Temperaturschwankungen des Abgases, das durch die Behandlungskammer (20 - 25) strömt, durch das mindestens eine zusätzliche Heizgerät (26 - 32) ausgeglichen werden können, um in der Behandlungskammer (20 - 25) eine konstante Temperatur zu erreichen.

5. Betriebsstätte nach einem der vorhergehenden Ansprüche, **dadurch gekennzeichnet, dass** mehrere Wärmebehandlungskammern (20 - 25) bereitgestellt sind, jede mit mindestens einem zusätzlichen Heizgerät (26 - 32) versehen, wobei das Abgas des Elektro-/Wärmegenerators (2, 3) durch geeignete Verteilungs- und Kombinierungsmittel (11 - 19, 34 - 41) an die verschiedenen Behandlungskammern verteilt und nachfolgend für eine gemeinsame Nachbehandlung mit den Abgasen der zusätzlichen Heizgeräte (26 - 32) wieder kombiniert wird.

6. Betriebsstätte nach Anspruch 4 und Anspruch 5, **dadurch gekennzeichnet, dass** für jede Behandlungskammer (20 - 25) ein separates Ventil (44 - 49) bereitgestellt ist, um die Durchsatzmenge des Abgases zu regeln, die durch die entsprechende Behandlungskammer (20 - 25) zu leiten ist, so dass die Temperaturen in den verschiedenen Behandlungskammern (20 - 25) separat und unabhängig voneinander eingestellt werden können.

## Revendications

1. Site d'exploitation (1) comprenant au moins une chambre de traitement thermique (20 - 25) pour soumettre des produits agencés à l'intérieur à la chaleur, et un générateur d'électricité/de chaleur (2, 3) qui fonctionne sur une base de combustion, sachant qu'il est réglé pour que les gaz d'échappement du générateur d'électricité/de chaleur (2, 3) s'écoulent directement à travers l'au moins une chambre de traitement thermique (20 - 25), sachant qu'au moins un corps de chauffe supplémentaire (26 - 32) qui fonctionne sur une base de combustion est prévu pour le chauffage supplémentaire de la chambre de traitement (20 - 25), sachant que le corps de chauffe supplémentaire (26 - 32) déclenche directement dans la chambre de traitement (20 - 25) respective et sachant que les gaz d'échappement qui s'écoulent à travers la chambre de traitement thermique (20 - 25) et les gaz d'échappement de l'au moins un corps de chauffe supplémentaire (26 - 32) sont alimentés vers un post-traitement commun, ce dernier étant un nettoyage mécanique ou chimique des gaz d'échappement, **caractérisé en ce que**
le générateur d'électricité/de chaleur (2, 3) comprend un moteur à essence et un circuit de refroidissement et
la chaleur résiduelle du générateur d'électricité/de chaleur (2, 3), prévue dans le circuit de refroidissement est utilisée dans une certaine mesure pour chauffer le site d'exploitation (1),
sachant que le circuit de refroidissement comprend un échangeur de chaleur (8) qui est relié d'une part à un système de conduits (7) qui transporte l'eau de refroidissement chauffée des unités de générateur du moteur à essence (2, 3) et d'autre part à un circuit de chauffage (9) du site d'exploitation afin de chauffer ce dernier.

2. Site d'exploitation selon la revendication 1, **caractérisé en ce que** le circuit de chauffage comprend un échangeur de chaleur supplémentaire (10) qui est relié au circuit de chauffage (9) du site d'exploitation pour préchauffer l'air de combustion pour le corps de chauffe supplémentaire (26 - 32).

3. Site d'exploitation selon la revendication 1 ou 2, **caractérisé en ce que** le site d'exploitation (1) est une usine de production de produits de fibres de verre, sachant que l'au moins une chambre de traitement sert au séchage des produits de fibre de verre produits, en particulier sous forme de nappes de fibres de verre.

4. Site d'exploitation selon l'une des revendications 1 à 3, **caractérisé en ce qu'**au moins une vanne pouvant être commandée (44 - 49) pour réguler la quantité débitée de gaz d'échappement du générateur d'électricité/de chaleur (2, 3) qui doit être canalisée à travers la chambre de traitement (20 - 25) est prévue pour obtenir la température de procédé désirée dans l'au moins une chambre de traitement (20 - 25), sachant que des fluctuations de température pouvant survenir des gaz d'échappement qui s'écoulent à travers la chambre de traitement (20 - 25) peuvent être compensées au moyen du au moins un corps de chauffe supplémentaire (26 - 32) pour obtenir une température constante dans la chambre de traitement (20 - 25).

5. Site d'exploitation selon l'une des revendications précédentes, **caractérisé en ce que** plusieurs chambres de traitement thermique (20 - 25) sont prévues, chacune ayant au moins un corps de chauffe supplémentaire (26 - 32), sachant que les gaz d'échappement du générateur d'électricité/de chaleur (2, 3) sont, par le biais de moyens de distribution et de combinaison appropriés (11 - 19 ; 34 - 41), distribués vers les différentes chambres de traitement et combinés ensuite à nouveau pour un post-traitement commun avec les gaz d'échappement des corps de chauffe supplémentaires (26 - 32).

6. Site d'exploitation selon les revendications 4 et 5, **caractérisé en ce que** pour chaque chambre de traitement (20 - 25), il est prévu une vanne séparée (44 - 49) pour réguler la quantité débitée des gaz d'échappement à canaliser à travers la chambre de traitement (20 - 25) respective, de façon à ce que les températures dans les différentes chambres de traitement (20 - 25) puissent être réglées séparément et indépendamment l'une de l'autre.
